# EUROPEAN PATENT APPLICATION

(11) **EP 1 914 986 A1**
(43) Date of publication of application: **23.04.2008**
(21) Application number: 06828175.7
(22) Date of filing: 22.11.2006
(51) Int. Cl.: H04N 5/445

(54) **AN ELECTRONIC PROGRAM GUIDE INTERFACE CUSTOMIZING METHOD, SERVER, SET TOP BOX AND SYSTEM**

(30) Priority: 20.01.2006 CN 200610033209
(71) Applicant: Huawei Technologies Co., Ltd., Longgang District, Shenzhen Guangdong 518129 (CN)
(72) Inventor: LIU, Weilong, Shenzhen, Guangdong 518129 (CN); CHEN, Jun, Shenzhen, Guangdong 518129 (CN)
(74) Representative: Epping - Hermann - Fischer
(86) International application number: PCT/CN2006/003140
(87) International publication number: WO 2007/082442

(57) **Abstract**

An electronic program guide interface customizing method, server, set top box and system. The electronic program guide template is combined with the dynamic data, and parsed to be the final presentable electronic program guide interface, and in particular, the electronic program guide server or set top box combines the electronic program guide page template with the dynamic data information to generate the electronic program menu interface. The solution of the invention could overcome the shortcoming in prior art that the customization of electronic program guide interface is inflexible and has low personality, and satisfy the user's different requirement to electronic program guide interface.

## Description

### Field of the Invention

The present invention relates to a technology for customizing an EPG (Electronic Program Guide) interface, in particular, to a technology for customizing an EPG interface by using an EPG template.

### Background of the Invention

In an IPTV (Internet Protocol TV) system, an EPG is an end-user-oriented EPG which is displayable on a user TV by a Set Top Box. By using the EPG, users may easily browse broadband video programs and select desired services.

Because the display effect of the EPG directly influences users' experience, an EPG interface should be diversified. Specifically, on the one hand, operators need to change the display style of the EPG interface from time to time to match different festivals and activities while providing fresh experience for the users continuously. On the other hand, the operators may display different interfaces for different user groups. For example, they may display a set of interfaces for hotel users, and another set of interfaces for home users. Moreover, users are usually not satisfied with the same interface style either. Thus, the system is required to provide multiple sets of interfaces for selection.

The above requirements make demands on customization and individuation of the EPG. In other words, the EPG is required to provide various interface display styles and adjust interface display elements easily and flexibly so as to rapidly provide a new EPG interface.

The existing customization solution of the EPG interface is usually implemented by changing skins, which includes: extracting some basic elements from a display interface as dynamic attributes of interface which mainly include background color, background picture, character font, character color and character size. A set of interface styles is formed by defining a group of basic elements. When a user accesses an EPG, the EPG obtains the attributes such as background and character from a designated interface style according to settings of the operator and user, replaces corresponding elements in the EPG interface, and displays a different interface.

In the above display solution of the EPG interface, only the background and character may be changed, but an interface layout cannot be changed, and the interface elements cannot be added or deleted as required. Therefore, the EPG interface is not customized or individualized enough to satisfy the users' needs.

In the existing customization solutions of the EPG interface, another more direct customization solution is to develop several sets of complete EPG interfaces directly according to the user's requirements(which includes the interface display and data processing), and then display different EPG interfaces as user' s selection. The solution for directly customizing the interface may well meet the user's requirements, but service processing logics are very likely to be influenced during invoking different interfaces. Moreover, it takes a heavy workload for developing multiple sets of complete interfaces.

### Summary of the Invention

To overcome the disadvantages of low customization and low individuation during customizing the EPG interface in the prior art, the invention provides a method, a server, a Set Top Box and a system for customizing an EPG interface, which help to meet various user requirements.

The invention provides a method for customizing an EPG interface to obtain EPG information, including:

a pre-customized EPG template is parsed together with selected dynamic data information to generate a displayable EPG interface.

The invention further provides an EPG server, including an EPG information storing unit and an EPG information determining unit.

The EPG information storing unit is capable of storing an EPG template and dynamic data information, wherein the EPG template and the dynamic data information are combinable to generate an EPG interface.

The EPG information determining unit is capable of determining an EPG information page template and dynamic data information which need to be obtained by a Set Top Box, according to user attribute information of the Set Top Box, wherein the template and the dynamic data information are combinable to generate an EPG information interface.

The invention further provides a Set Top Box, including an EPG information obtaining unit and an EPG interface determining unit.

The EPG information obtaining unit is capable of receiving and obtaining dynamic data information sent from an EPG server, and providing the information to an EPG interface determining unit.

The EPG interface determining unit is capable of combining a pre-customized EPG page template with the dynamic data information to generate a displayable EPG interface.

The invention further provides a system for customizing an EPG interface, including an EPG server and a Set Top Box.

The EPG server is capable of storing an EPG template and dynamic data information, and determining an EPG page template and dynamic data information which need to be obtained by the Set Top Box, according to user attribute information of the Set Top Box, wherein the EPG template and the dynamic data information are combinable to generate the EPG interface.

The Set Top Box is capable of obtaining the EPG interface generated by combining a pre-customized EPG page template with selected dynamic data information.

It can be seen from the above implementation solutions provided by the invention that the invention has the following beneficial effects.

1. In the invention, a display mode and fixed data are separated from a dynamic data value, so that an interface is re-customized only by adjusting the existing EPG templates or regenerating a set of EPG templates. This should not influence on the whole processing flow and architecture of the EPG server.

2. In the invention, with the EPG template solution, an interface background and a character may be conveniently changed, an interface layout adjustment may be implemented, and further an interface element may be added or deleted as required. Thus, there are the high customization and individuation.

3. In comparison with re-developing a whole set of EPG interfaces, the workload may be greatly reduced by using the EPG template solutions of the invention.

### Brief Description of the Drawings

Figure 1 illustrates a schematic structure of an EPG template according to one embodiment of the invention;

Figure 2 illustrates a schematic flow chart of server parsing according to one embodiment of the invention;

Figure 3 illustrates a parsing flow during performing terminal parsing according to one embodiment of the invention;

Figure 4 is a schematic diagram of data display in a template according to one embodiment of the invention;

Figure 5 is a schematic diagram of a specific implement structure of system according to one embodiment of the invention; and

Figure 6 is another schematic diagram of a specific implement structure of system according to one embodiment of the invention.

### Detailed Description of the Invention

Preferred embodiments of the invention will now be described in detail in conjunction with corresponding drawings. However, the invention will not be limited to the specific embodiments.

An EPG interface usually includes a data display mode and data, in which the data may be classified into static data and dynamic data. The static data indicates relatively fixed contents in the interface, which will not change due to a different accessing interface time, a different accessing person or other different context environments. Usually, the static data includes the button, background picture, illustrative character, operator identity, etc. The dynamic data indicates contents related with service logic, which will vary according to a request parameter, e.g., the contents related with film information (including title, brief introduction, poster picture and so on), user subscription information, business statistical data Bulletin caption, etc. An interface display mode defines display modes of the static data and the dynamic data in the interface. The display modes specify what data contents are displayable and describe the location, font, character color and so on for displaying data contents.

In the technical solution of the invention, the static data, the dynamic data and the interface display mode of the EPG interface are separated, in which the static data and the interface display mode of interface are relatively fixed. However, in order to describe the display mode of the dynamic data, dynamic data information needs to be agreed on with a dynamic data generation source. In other words, all dynamic data information which appears in specified pages is agreed on. For example, for a film information display page, the dynamic data information which needs to be agreed on with the dynamic data generation source (which means a film information acquiring interface provided by an EPG application server) to generate must include the Film Title, Film Length, Leading Cast, Director, Brief Introduction, Storing Path Of Poster Pictures, etc. The dynamic data information contains three attributes of data item, data type and data value. The data item indicates a dynamic data Identity, which is used to confirm a certain item of dynamic data in an EPG page template. For example, the data item contained in a film information display page includes the "Film Title", "Film Length", "Leading Cast", "Director", "Brief Introduction" and "Poster". The data Type indicates a value type for each dynamic data item. The data value is a specific value of dynamic data item. For example, the correspondence relationships among the data item, the data type and the data value contained in the film information display page are shown as follows.

| Data item | Data type | Data value |
|---|---|---|
| Film title | Character string (40 bits) | TRUMAN'S WORLD |
| Film length | Integral type | 96 |
| Leading cast | Character string (60 bits) | JIM CARREY,LAURA LINNEY |
| Director | Character string (60 bits) | PETER WEIR |
| Brief introduction | Character string (256 bits) | As a life not expected, TRUMAN BURBANK is adopted by a television network company... |
| Poster | Character string (128 bits) | /tupian/usfilm3401.jpg |

When the display mode of the dynamic data is described, only a whole set of data items and data types of the dynamic data, which are likely to appear in the interface, need to be known, and characteristics of the data items (location, font , color, etc.) which need to be displayed in the interface are defined.

An embodiment of the technical solution of the invention is as follows.

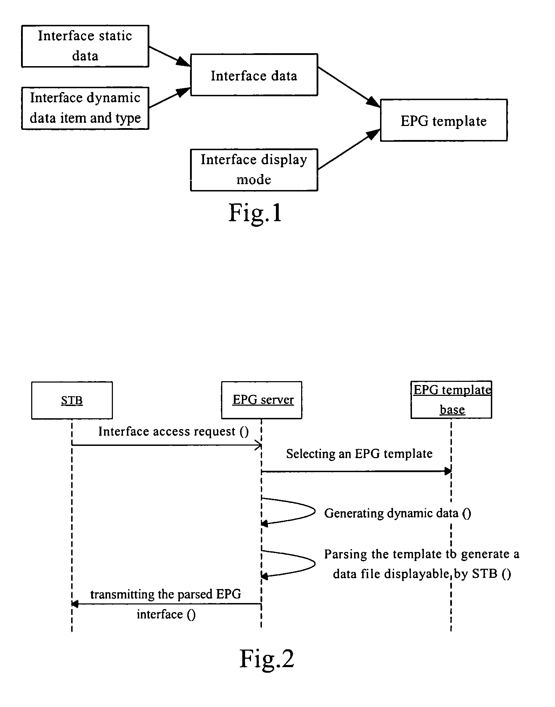

First of all, an EPG template base is established in an EPG server. Figure 1 illustrates a schematic structure of an EPG template according to one embodiment of the invention. As shown in Figure 1, interface static data, interface dynamic data item and interface dynamic data type constitute interface data, and the interface data and the interface display mode constitute the EPG template. In other words, the interface static data, the interface dynamic data item and the interface dynamic data type constitute the EPG template together with the interface display mode.

The EPG template base indicates the set of EPG templates. Each EPG template is a group of style definition files stored by using a file system. The EPG is consisted of a plurality of pages which usually include a logon page, a program browsing page, a statistical data page, a customer service page and so on. Definitions of display mode for a certain page in the pages and definitions of the static data and the dynamic data item contained in the certain page are referred to as a page template. For one page, a plurality of page templates may be defined according to user attribute. The user attribute may be classified according to a geographical region such as different provinces, or according to customer identity such as VIP and general customer. For example, a different style of EPG interface needs to be displayed for users of different regions. For region A, a poster in a film information page is located on the top of a page, while for region B, a poster in the film information page is located in the middle of the page and no director information needs to be displayed. A group of page templates corresponding to pages accomplishing all service flows constitute a set of EPG templates.

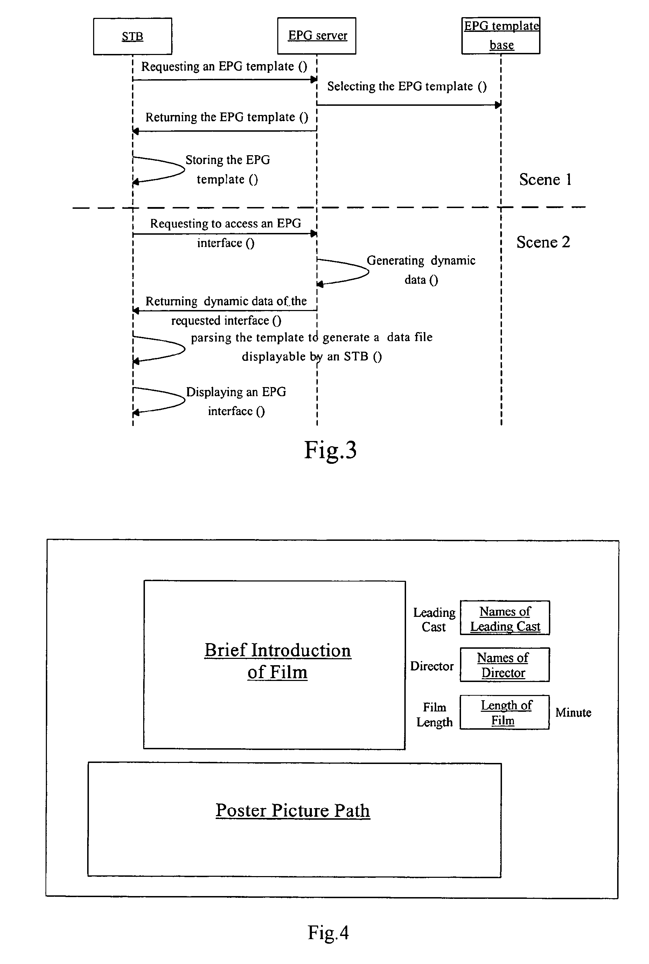

When the EPG templates are loaded, a different user attribute is bound with a different EPG template. For example, when the attribute is classified according to the different user regions, and when the EPG processes a user's request, an EPG template corresponding to region A is selected for display if it is determined that the user belongs to region A, and an EPG template corresponding to region B is selected for display if it is determined that the user belongs to region B. For example, the EPG template corresponding to region A is an EPG template a. A file corresponding to a film information page of EPG template a is described using XSLT language, wherein the file defines that a poster picture of 320 x 240 is placed on the top of page and a paragraph of characters is placed below the picture as a brief introduction of the film, as shown in Figure 4. The template further includes static character data such as "Leading Cast", "Director" , "Film Length", etc.

A kind of user attribute may relate to multiple sets of EPG templates. Users may use the EPG templates by selection, or a default EPG template may be specified by an EPG server.

The static data, dynamic data item and data display mode of the EPG interface may be defined in advance by a specific language according to an operator's requirement or an end user's requirement to form the EPG template. The EPG template needs the specific language to describe. In one preferred embodiment of the invention, the XSLT (eXtensible Stylesheet Language Transformation) of Industrial Standard is used to define the EPG template, and the XML is used to describe the dynamic data. The XSLT is the most important part in the XSL(eXtensible Stylesheet Language) standard, which may conveniently define the data display layout and data display mode. The XSLT is a language for converting the XML (eXtensible Markup Language), which is used to convert an XML file into another XML file or another type of file. In other words, the XML file is converted into a format identifiable by a browser. For example, the XML file is converted into an HTML file.

After the EPG template base is established, the templates in the EPG template base may be combined with corresponding dynamic data values, and then the combination is converted to generate data displayable by a terminal device. This process is referred to as an EPG interface parsing. There are two EPG interface parsing modes, i.e. an EPG server parsing and a terminal parsing. The parsing modes are determined during system deployment and may not be selected by users. If a Set Top Box of user terminal supports a conversion of template page (for example, XSLT+XML conversion), the terminal parsing mode may be employed. Otherwise, the EPG server parsing mode is employed. Both of the modes will now be described in detail in conjunction with corresponding drawings respectively.

Figure 2 illustrates a parsing flow during performing an EPG server parsing. In the EPG server parsing mode, multiple sets of predefined EPG templates are stored in the EPG template base. As described above, the EPG template base indicates the set of EPG templates. Each EPG template is a group of style definition files stored by using a file system. The processing flow is as follows.

Process 101: An authentication is needed as a user logs on an EPG server. A Set Top Box sends an authentication request containing user attribute of the Set Top Box to the EPG server (i.e. the EPG Server).

Process 102: The EPG server selects an EPG home page template according to the user attribute after receiving the authentication request.

Process 103: After the authentication is passed, the EPG server obtains the user attribute, buffers the user attribute in memory, and sends an authentication response containing a data file of the EPG home page to the Set Top Box.

Process 104: The STB (Set Top Box) sends an interface access request to the EPG server according to contents in the selected EPG home page. In the present embodiment, a request type contained in the request is browsing specified film information, and a request parameter is film ID123.

Process 105: The EPG server selects a corresponding EPG template from the EPG template base established in advance according to the user attribute.

Process 106: The EPG server generates a dynamic data value according to the interface request type and the request parameter. In other words, the EPG server parses the request parameter in the request to get film ID123, and the dynamic data values such as Film Title, Leading Cast, Director, Film Length, Brief Introduction, Poster Picture Path and so on are returned in an XML format via a film information query interface;

It should be noted that the performing order of Process 105 and Process 106 is not limited, i.e. Process 106 may be first performed, and then Process 105 is performed.

Process 107: The EPG server parses the EPG template together with the dynamic data to generate a data file (i.e. an HTML file) displayable by the STB. Here, it should be noted that different file types are supported by different manufacturers and different types of STBs. In a preferred embodiment of the invention, the data file is a web page described using the HTML language, and a browser (similar to Internet Explorer) supporting the HTML standards is embedded in the Set Top Box. The EPG server parses an XSLT template file and an XML file to generate a standard HTML page file.

Process 108: the EPG server feeds a parsed result (i.e. the data file) back to the STB as a response to the interface access request, and the parsed result is displayed by the STB. At this point, the STB displays the received data file, and a corresponding EPG interface is obtained.

Figure 3 is a schematic flow chart of terminal parsing according to one embodiment of the invention. In the terminal parsing mode, an EPG template needs to be stored in an STB. The parsing processes are as follows.

Process 201: An authentication process is implemented, which is similar to above Processes 101-103. Thus, it will not be described again here.

Process 202: The STB sends an interface access request to an EPG server according to contents in the selected EPG home page, wherein the request may contains a request type which is browsing specified film information, and a request parameter which is film ID123.

Process 203: The EPG server generates a dynamic data value according to the interface request type and request parameter. The process is similar to the above Process 106.

Process 204: After receiving the dynamic data value and the EPG page template ID, the Set Top Box determines whether an EPG page template corresponding to the EPG page template ID is stored locally. If the EPG page template is not stored, the Set Top Box needs to send a request to the EPG server for downloading the EPG page template and stores it locally. If the EPG page template is stored in the Set Top Box, Process 205 is directly performed.

The processing flow for downloading the EPG page template is as follows.

Process a: The Set Top Box sends the request for downloading the EPG page template to the EPG server.

Process b: The EPG server selects a corresponding EPG page template from an EPG template base according to the user attribute. For example, if the EPG server knows that the user belongs to region A according to the authentication process, the request type and the parameter sent from the Set Top Box in the above Process 202 are browsing the film information and film ID123, respectively, the EPG server selects a template, which corresponds to film information of film ID 123 for region A, from the EPG template base.

Process c The EPG server sends the selected EPG page template to the Set Top Box.

Process d The Set Top Box receives the EPG page template sent by the EPG server, and stores it locally.

The above processing flow for downloading the EPG page template may be performed at any time before or after Process 204.

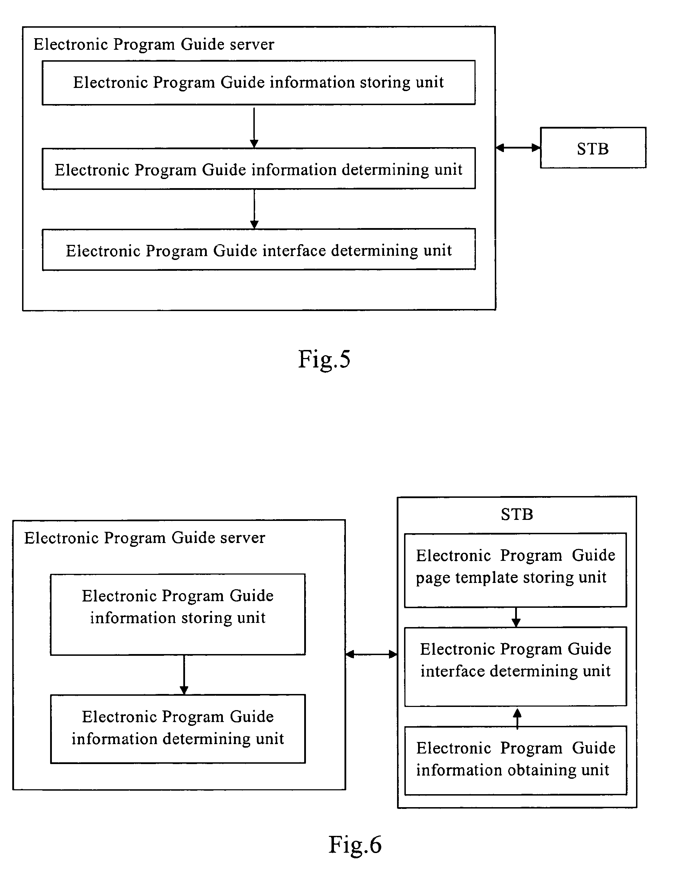

Process 205: The Set Top Box parses the EPG page template stored in Process 204 together with the dynamic data obtained in Process 203 to generate a data file such as HTML file displayable by the Set Top Box, i.e. a corresponding EPG interface is obtained.The invention further provides a system for customizing an EPG interface, the specific structure of which is shown in Figure 5 and Figure 6. The system mainly includes:

(1) an EPG server arranged on a network side, which is capable of providing EPG information to a Set Top Box, and specifically, storing an EPG template and dynamic data information that are combinable to generate an EPG interface, and determining an EPG page template and dynamic data information which need to be obtained by the Set Top Box, according to user attribute information of the Set Top Box; and

(2) the Set Top Box, which is capable of obtaining an EPG interface generated by combining a pre-customized EPG page template with a selected dynamic data information, the EPG interface is displayable by a TV screen.

Specifically, in the system, the EPG server or the Set Top Box may combine the EPG page template with the dynamic data information to generate the EPG interface.

Embodiment structures of the EPG server and the Set Top Box in the system according to the invention will be described in conjunction with the drawings.

As shown in the drawings, there are two solutions for the system of the invention.

Solution 1

In the system of the invention, if an EPG server combines an EPG page template with dynamic data information to generate an EPG interface and sends the EPG interface to a Set Top Box, the EPG server provided by the invention is shown in Figure 5. The EPG server shown in Figure 5 needs to transmit the EPG interface generated by an EPG interface determining unit to the Set Top Box, so that a user obtains a corresponding EPG interface. Solution 1 may be implemented by using a Set Top Box with any function.

In Figure 5, a specific structure of the EPG server includes the following units:

(1) an EPG information storing unit, which is capable of storing the dynamic data information and the EPG template that are combinable to generate the EPG interface,

wherein the EPG page template may include static data, dynamic data item and dynamic data type, and interface display mode of the EPG interface, and is stored in an EPG template base;

(2) an EPG information determining unit, which is capable of determining the dynamic data information and the EPG page template which need to be obtained by the Set Top Box, according to user attribute information of the Set Top Box;

(3) an EPG interface determining unit, which is capable of combining a pre-customized EPG page template with a selected dynamic data information to generate a displayable EPG interface.

In the above Solution 1, the specific process in which the Set Top Box obtains the EPG interface from the EPG server may refer to Figure 2 and the above descriptions thereof. Thus, the process will not be described here.

Solution 2

In the system of the invention, as shown in Figure 6, the invention provides embodiment structures of the EPG server and the Set Top Box respectively.

The EPG server may include an EPG information storing unit and an EPG information determining unit. The EPG server further needs to send corresponding dynamic data information and an EPG template determined by the EPG information determining unit to the Set Top Box, so that the dynamic data information is combinable with the EPG template in the Set Top Box to generate a corresponding EPG interface.

The Set Top Box may include an EPG information obtaining unit and an EPG interface determining unit. The EPG information obtaining unit is capable of receiving and obtaining selected dynamic data information sent from the EPG server, and providing it to the EPG interface determining unit. Moreover, in the case of configuring the EPG interface determining unit in the Set Top Box, the Set Top Box may further includes an EPG page template storing unit, which is used to store an EPG page template obtained from the EPG server in advance. Thus, after the EPG server sends the dynamic data information, the Set Top Box may combine the dynamic data information from the EPG server, which is obtained by the EPG information obtaining unit, with a corresponding EPG template which is locally stored to generate the corresponding EPG interface. Accordingly, the EPG interface is displayed on a display terminal.

In the above Solution 2, the specific process in which the Set Top Box obtains the EPG interface from the EPG server may refer to Figure 3 and the above descriptions thereof. Thus, the process will not be described here.

With the technical solutions of the invention, when an interface needs to be re-customized, it is only required to adjust an existing EPG template or regenerate a set of EPG templates. Thus, there is not any influence on the whole processing flow and architecture of the EPG server.

Only the preferred embodiments of the invention are described above. Accordingly, various modifications and variations made by those skilled in the art on the solution of the invention should be included in the protection scope of the invention.

## Claims

1. A method for customizing an Electronic Program Guide interface, which is used to obtain Electronic Program Guide information, comprising:
parsing a pre-customized Electronic Program Guide template together with selected dynamic data information to generate a displayable Electronic Program Guide interface.

2. The method for customizing an Electronic Program Guide interface according to claim 1, further comprising:
establishing an Electronic Program Guide template base in an Electronic Program Guide server, wherein the Electronic Program Guide template base comprises a plurality of Electronic Program Guide templates, and each of the Electronic Program Guide templates comprises an Electronic Program Guide page template.

3. The method for customizing an Electronic Program Guide interface according to claim 2, wherein the establishing the Electronic Program Guide template base comprises:
establishing the Electronic Program Guide page template;
forming a set of Electronic Program Guide templates out of a group of Electronic Program Guide page templates accomplishing all service flows;
binding the set of Electronic Program Guide templates with user attribute; and
loading the bound Electronic Program Guide templates into the Electronic Program Guide template base.

4. The method for customizing an Electronic Program Guide interface according to claim 3, wherein the establishing the Electronic Program Guide page template comprises:
defining static data, dynamic data item and type, and interface display mode of
the Electronic Program Guide interface to form the Electronic Program Guide page template.

5. The method for customizing an Electronic Program Guide interface according to any one of claims 2 to 4, further comprising obtaining the Electronic Program Guide interface by a Set Top Box through:
sending, by the Set Top Box, an interface access request to the Electronic Program Guide server;
selecting, by the Electronic Program Guide server, the Electronic Program Guide page template from the Electronic Program Guide template base and generating a dynamic data value;
parsing, by the Electronic Program Guide server, the selected Electronic Program Guide page template together with the generated dynamic data value to generate a data file displayable by the Set Top Box as the Electronic Program Guide interface to be obtained by the Set Top Box; and
feeding, by the Electronic Program Guide server, the parsed result back to the Set Top Box as a response to the interface access request, and obtaining, by the Set Top Box, the Electronic Program Guide interface.

6. The method for customizing an Electronic Program Guide interface according to claim 5, wherein the interface access request comprises a request type and a request parameter; and
the Electronic Program Guide server selects a corresponding Electronic Program Guide page template from the Electronic Program Guide template base according to the request type, the request parameter and the user attribute after the interface access request is received; and
the Electronic Program Guide server generates a dynamic data value according to the request type and the request parameter contained in the interface access request.

7. The method for customizing an Electronic Program Guide interface according to any one of claims 2 to 4, further comprising obtaining the Electronic Program Guide interface by a Set Top Box through:
sending, by the Set Top Box, an interface access request to the Electronic Program Guide server;
generating, by the Electronic Program Guide server, an Electronic Program Guide page template ID and a dynamic data value, and feeding the dynamic data value and the Electronic Program Guide page template ID back to the Set Top Box as a response to the interface access request;
determining, by the Set Top Box, an Electronic Program Guide page template corresponding to the Electronic Program Guide page template ID from the Electronic Program Guide page template stored in the Set Top Box; and
parsing, by the Set Top Box, the stored Electronic Program Guide page template together with the dynamic data to generate a data file displayable by the Set Top Box, and obtaining the Electronic Program Guide interface.

8. The method for customizing an Electronic Program Guide interface according to claim 7, wherein the interface access request comprises a request type and a request parameter; and
The Electronic Program Guide server generates the dynamic data value according to the request type and the request parameter contained in the request and obtains the Electronic Program Guide page template ID according to the user attribute.

9. The method for customizing an Electronic Program Guide interface according to claim 7, wherein the Electronic Program Guide page template stored in the Set Top Box is obtained by sending a request to the Electronic Program Guide server, comprising:
sending, by the Set Top Box, a request for downloading the Electronic Program Guide page template to the Electronic Program Guide server;
selecting, by the Electronic Program Guide server, a corresponding Electronic Program Guide page template from the Electronic Program Guide template base according to the user attribute and sending the selected Electronic Program Guide page template to the Set Top Box; and
receiving and storing, by the Set Top Box, the Electronic Program Guide page template.

10. The method for customizing an Electronic Program Guide interface according to claim 7, wherein the method further comprises:
sending a request to the Electronic Program Guide server for obtaining the Electronic Program Guide page template if no Electronic Program Guide page template corresponding to the Electronic Program Guide page template ID is stored in the Set Top Box.

11. The method for customizing an Electronic Program Guide interface according to claim 1, wherein the method further comprises:
sending, by a Set Top Box, an authentication request containing user attribute of the Set Top Box to an Electronic Program Guide server;
selecting an Electronic Program Guide home page according to the user attribute after the authentication request is received by the Electronic Program Guide server; and
sending, by the Electronic Program Guide server, an authentication response containing a data file of the Electronic Program Guide home page to the Set Top Box.

12. An Electronic Program Guide server, comprising:
an Electronic Program Guide information storing unit and an Electronic Program Guide information determining unit, wherein,
an Electronic Program Guide information storing unit is capable of storing dynamic data information and an Electronic Program Guide template, and the dynamic data information and the Electronic Program Guide template are combinable to generate an Electronic Program Guide interface; and
the Electronic Program Guide information determining unit is capable of determining an Electronic Program Guide information page template and dynamic data information according to user attribute information of the Set Top Box and the Electronic Program Guide information page template and dynamic data information need to be obtained by a Set Top Box; the template and the dynamic data information are combinable to generate an Electronic Program Guide interface.

13. The Electronic Program Guide server according to claim 12, wherein the Electronic Program Guide page template comprises static data, dynamic data item and type, and interface display mode of the Electronic Program Guide interface.

14. The Electronic Program Guide server according to claim 12 or 13, further comprising an Electronic Program Guide interface determining unit, the Electronic Program Guide interface determining unit being capable of combining the selected dynamic data information and the pre-customized Electronic Program Guide page template determined by the Electronic Program Guide information determining unit and generating a displayable Electronic Program Guide interface.

15. A Set Top Box, comprising:
an Electronic Program Guide information obtaining unit and an Electronic Program Guide interface determining unit, wherein,
the Electronic Program Guide information obtaining unit is capable of receiving
and obtaining dynamic data information transmitted from an Electronic Program Guide server and providing the dynamic data information to an Electronic Program Guide interface determining unit; and
the Electronic Program Guide interface determining unit is capable of combining a pre-customized Electronic Program Guide page template with the dynamic data information to generate a displayable Electronic Program Guide interface.

16. The Set Top Box according to claim 15, wherein the Set Top Box further comprises an Electronic Program Guide page template storing unit, the Electronic Program Guide page template storing unit being capable of storing the Electronic Program Guide page template obtained from the Electronic Program Guide server and providing the stored Electronic Program Guide page template to the Electronic Program Guide interface determining unit.

17. A system for customizing an Electronic Program Guide interface, comprising:
an Electronic Program Guide server and a Set Top Box, wherein,
the Electronic Program Guide server is capable of storing dynamic data information and an Electronic Program Guide template, the dynamic data information and the Electronic Program Guide template are combinable to generate an Electronic Program Guide interface, and determining dynamic data information and an Electronic Program Guide page template to be obtained by a Set Top Box according to user attribute information of the Set Top Box; and
the Set Top Box is capable of obtaining an Electronic Program Guide interface generated by combining a pre-customized Electronic Program Guide page template with a selected dynamic data information.

18. The system for customizing an Electronic Program Guide interface according to claim 17, wherein the Electronic Program Guide server or the Set Top Box combines the Electronic Program Guide page template with the dynamic data information to generate the Electronic Program Guide interface.
